# EUROPEAN PATENT SPECIFICATION

(11) **EP 3 926 778 B1**
(45) Date of publication and mention of the grant of the patent: **25.12.2024**
(21) Application number: 20755552.5
(22) Date of filing: 05.02.2020
(51) Int. Cl.: H02J 3/00, H02J 3/14

(54) **TARGET ELECTRIC POWER CALCULATION DEVICE, TARGET ELECTRIC POWER CALCULATION METHOD, AND TARGET ELECTRIC POWER CALCULATION PROGRAM**
VORRICHTUNG ZUR BERECHNUNG EINES ELEKTRISCHEN ZIELS, VERFAHREN ZUR BERECHNUNG EINES ELEKTRISCHEN ZIELS UND PROGRAMM ZUR BERECHNUNG EINES ELEKTRISCHEN ZIELS
DISPOSITIF DE CALCUL DE PUISSANCE ÉLECTRIQUE CIBLE, PROCÉDÉ DE CALCUL DE PUISSANCE ÉLECTRIQUE CIBLE ET PROGRAMME DE CALCUL DE PUISSANCE ÉLECTRIQUE CIBLE

(30) Priority: 13.02.2019 JP 2019023839
(43) Date of publication of application: 22.12.2021
(73) Proprietor: DAIKIN INDUSTRIES, LTD., Osaka-Shi, Osaka 530-0001 (JP)
(72) Inventor: KURODA, Kouhei, Osaka-shi, Osaka 530-8323 (JP)
(74) Representative: Goddar, Heinz J.
(86) International application number: PCT/JP2020/004400
(87) International publication number: WO 2020/166456

(56) References cited:
- EP-A2- 1 758 225
- AU-A1- 2016 241 265
- JP-A- 2002 165 361
- JP-A- 2016 127 688
- JP-A- H 099 502
- US-A1- 2016 241 033
- US-A1- 2018 323 643

## Description

### [Technical Field]

The invention herein relates a demand control system.

### [Background Art]

A demand control process has been known in the art to control power supplied to equipment (e.g., air-conditioner) based on target power in order to reduce the contracted power. Check technology has also been advanced to check the adequacy of target power that is selected when performing the demand control process.

### [Related-Art Documents]

### [Patent Document]

[Patent Document 1] Japanese Laid-Open Patent Publication No. 2002-165361

### [Summary of the Invention]

### [Problem to be Solved by the Invention]

Unfortunately, the conventional check technology is not so advanced as to derive proper target power upon finding that the target power is inadequate.

Document US 2016/241033 A1 discloses obtaining an average power consumption of electrical apparatus in a set time period, and obtaining a spare power of the average power consumption with respect to a target power in the set time period that is based on the set power, for the purpose of updating a demand value.

The claimed invention provides a demand control system according to claim 1

The present invention can provide a demand control system comprising a target power calculation apparatus for deriving a target power that is to be set when performing a demand control process.

The dependent claims relate to special embodiments.

### [Brief Description of Drawings]

[Fig. 1] Fig. 1 is a first drawing illustrating an example of the system configuration of a demand control system according to a first embodiment.
[Fig. 2] Fig. 2 is a drawing illustrating specific examples of demand control objects.
[Fig. 3] Fig. 3 is a drawing illustrating an example of the hardware configuration of a target power calculation apparatus.
[Fig. 4] Fig. 4 is a drawing illustrating an example of the functional configuration of a demand controller.
[Fig. 5] Fig. 5 is a drawing illustrating a specific example of a demand control process.
[Fig. 6] Fig. 6 is a drawing illustrating specific examples of analytic results.
[Fig. 7] Fig. 7 is a drawing illustrating specific examples of history information.
[Fig. 8] Fig. 8 is a drawing illustrating an example of the functions of the target power calculation apparatus that are implemented during a learning phase of the system according to the first embodiment.
[Fig. 9] Fig. 9 is a drawing illustrating an example of the functions of the target power calculation apparatus that are implemented during an inference phase of the system according to the first embodiment.
[Fig. 10] Fig. 10 is a flowchart illustrating the flow of a target power calculation process by the target power calculation apparatus of the system according to the first embodiment.
[Fig. 11] Fig. 11 is a drawing illustrating an example of the functions of the target power calculation apparatus that are implemented during a learning phase of the system according to the second embodiment.
[Fig. 12] Fig. 12 is a drawing illustrating an example of the functions of the target power calculation apparatus that are implemented during an inference phase of the system according to the second embodiment.
[Fig. 13] Fig. 13 is a flowchart illustrating the flow of a target power calculation process by the target power calculation apparatus of the system according to the second embodiment.
[Fig. 14] Fig. 14 is a second drawing illustrating an example of the system configuration of a demand control system.
[Fig. 15] Fig. 15 is a drawing illustrating an example of the functional configuration of a target power calculation apparatus of the system according to the third embodiment, not being part of the present invention.
[Fig. 16] Fig. 16 is a flowchart illustrating the flow of a target power calculation process by the target power calculation apparatus of the system according to the third embodiment, not being part of the present invention.

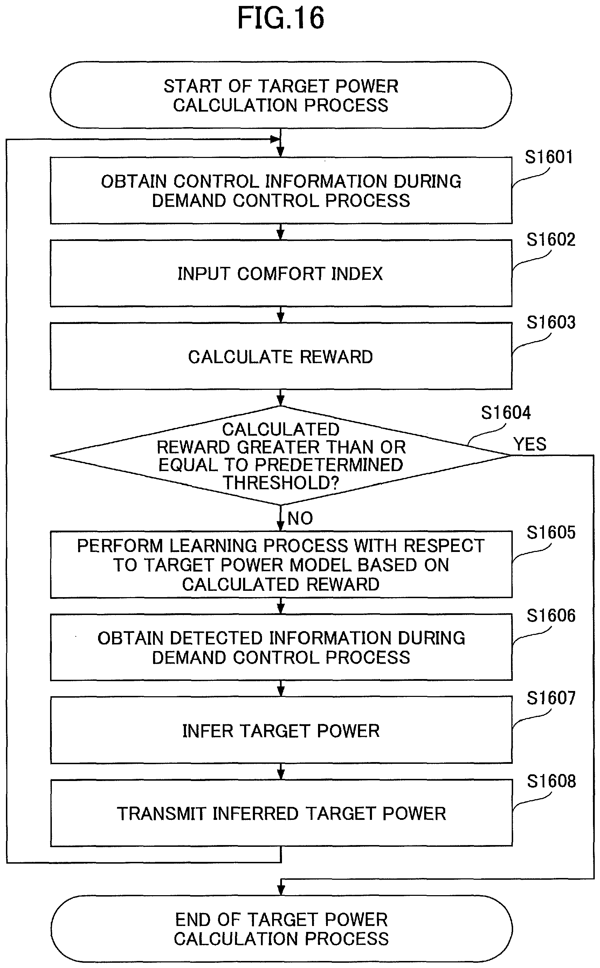

[Fig. 16] Fig. 16 is a flowchart illustrating the flow of a target power calculation process by the target power calculation apparatus according to the third embodiment.

### [Mode for Carrying Out the Invention]

In the following, embodiments will be described with reference to the accompanying drawings. In the specification and drawings, elements having substantially the same functions or configurations are referred to by the same numerals, and a duplicate description thereof will be omitted.

### [First Embodiment]

### <System Configuration of Demand Control System>

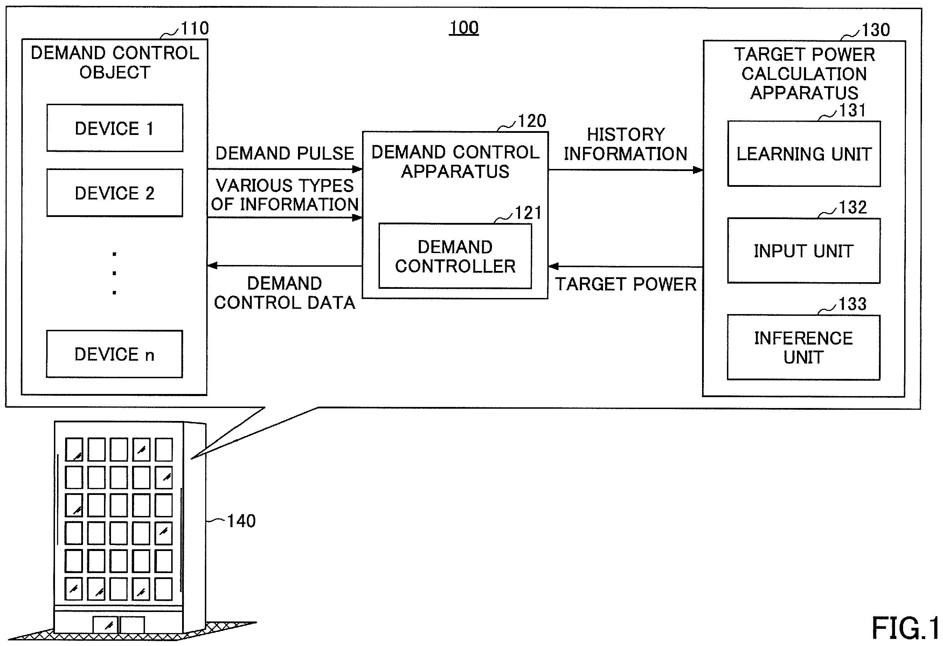

The system configuration of a demand control system will be described first. Fig. 1 is a first drawing illustrating an example of the system configuration of a demand control system. As illustrated in Fig. 1, a demand control system 100, which is installed in a building 140 such as an office building, includes a demand control object 110, a demand control apparatus 120, and a target power calculation apparatus 130.

The demand control object 110 includes devices for which supplied power is controlled. The demand control apparatus 120 controls power supplied to each device such that the target power is not exceeded. The device 1, device 2, ..., device n illustrated in Fig. 1 are air-conditioners installed in each room in the building 140, for example.

The devices included in the demand control object 110 operates based on demand control data (e.g., suspend instruction for suspending the supply of power, resume instruction for resuming the supply of power, etc.) sent from the demand control apparatus 120.

The amount of power consumed by each device included in the demand control object 110 is transmitted as demand pulses to the demand control apparatus 120. Further, device information about each device of the demand control object 110 and various types of information such as environmental information, device information, and the like detected by each device of the demand control object 110 during the demand control process are transmitted to the demand control apparatus 120.

The demand control apparatus 120 has a demand control program installed therein, which is executed to cause the demand control apparatus 120 to function as a demand controller 121.

The demand controller 121 transmits:
- information obtained during the demand control process (which includes various types of information transmitted from the demand control object 110),
- the analytic results of analyzing the obtained information,
and the like (which will hereinafter be referred to as "history information") to the target power calculation apparatus 130.

The demand controller 121 obtains a target power that is newly calculated by the target power calculation apparatus 130 responding to the history information transmitted to the target power calculation apparatus 130, followed by setting the target power in the memory in the demand control apparatus 120. The demand controller 121 performs a demand control process based on the target power setting.

The target power calculation apparatus 130 has a target power calculation program installed therein, which is executed to cause the target power calculation apparatus 130 to function as a learning unit 131, an input unit 132, and an inference unit 133.

The learning unit 131, which is an example of an obtainment unit, obtains the history information transmitted from the demand controller 121. The learning unit 131 is also an example of a learning unit, and performs machine learning with respect to a model for calculating target power based on the obtained history information. With this arrangement, the learning unit 131 generates a trained model for calculating target power.

The input unit 132 is an example of an input unit. The input unit 132 receives information entered by the administrator of the demand control apparatus 120 when the learning unit 131 performs machine learning with respect to a model, for example. The administrator of the demand control apparatus 120 enters knowledge obtained by referring to the history information. The entering of information into the input unit 132 may be performed either manually or automatically. Automatic entering of information into the input unit 132 may include a method of entering information by generating data in which information is arrayed in a predetermined format, and then feeding the data to the input unit 132.

The inference unit 133 inputs, into the trained model, information newly transmitted from the demand controller 121 to execute the trained model, thereby calculating an adequate target power. Further, the inference unit 133 transmits the calculated target power to the demand controller 121.

### <Specific Example of Demand Control Object>

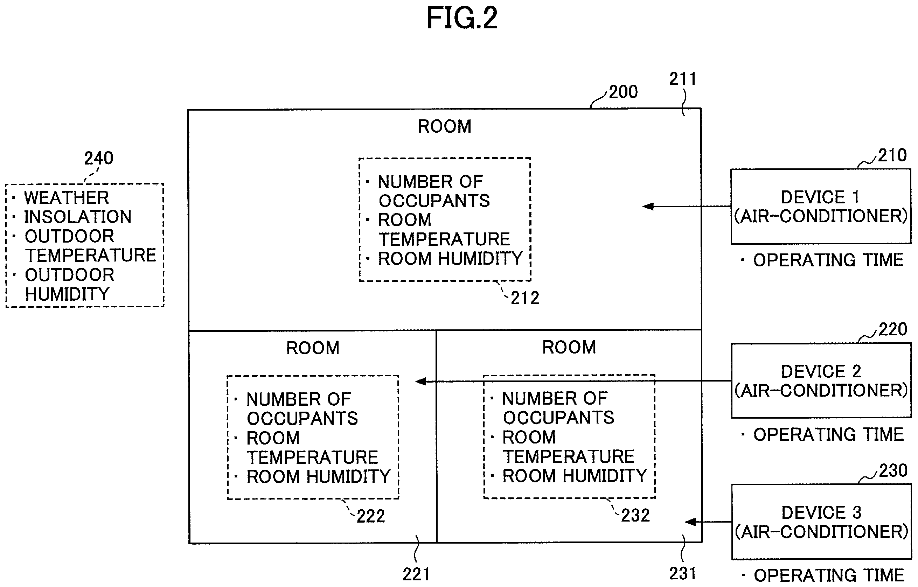

In the following, specific examples of the demand control object 110 will be described. Fig. 2 is a drawing illustrating specific examples of demand control objects. Fig. 2 illustrates air-conditioners 210, 220, and 230 as examples of the demand control object 110.

The air-conditioner 210 functions to remove contamination from the air and automatically adjust temperature and humidity inside a room 211 on a predetermined floor 200 of the building 140. The air-conditioner 210 detects in-room information 212 (e.g., the number of occupants, room temperature, room humidity, and the like in the room 211) while operating. The air-conditioner 210 also detects a length of operating time while operating.

Similarly, the air-conditioner 220 functions to remove contamination from the air and automatically adjust temperature and humidity inside a room 221 on the predetermined floor 200 of the building 140. The air-conditioner 220 detects in-room information 222 (e.g., the number of occupants, room temperature, room humidity, and the like in the room 221) while operating. The air-conditioner 220 also detects a length of operating time while operating.

Similarly, the air-conditioner 230 functions to remove contamination from the air and automatically adjust temperature and humidity inside a room 231 on the predetermined floor 200 of the building 140. The air-conditioner 230 detects in-room information 232 (e.g., the number of occupants, room temperature, room humidity, and the like in the room 231) while operating. The air-conditioner 230 also detects a length of operating time while operating.

The air-conditioners 210, 220, and 230 further detect open-air information 240 (e.g., weather, insolation, outdoor temperature, outdoor humidity, and the like outside the building 140) while operating.

Although power lines for supplying power to the air-conditioners 210, 220, and 230 are not illustrated in Fig. 2, these power lines are provided with respective power meters attached thereto. The power meters are configured to transmit demand pulses to the demand control apparatus 120.

Control lines for transmitting demand control data to the air-conditioners 210, 220, and 230 are not illustrated in Fig. 2. The air-conditioners 210, 220, and 230 are configured to receive demand control data transmitted from the demand control apparatus 120 through such control lines.

Communication lines for transmitting environmental information (in-room information and open-air information) detected by the air-conditioners 210, 220, and 230 to the demand control apparatus 120 are not illustrated in Fig. 2. The air-conditioners 210, 220, and 230 are configured to transmit environmental information to the demand control apparatus 120 through such communication lines. The air-conditioners 210, 220, and 230 are further configured to transmit device information about the devices (inclusive of information about a length of operating time) to the demand control apparatus 120 through such control lines.

### <Hardware Configuration of Target Power Calculation Apparatus>

In the following, the hardware configurations of apparatuses constituting the demand control system 100 will be described. Since the demand control apparatus 120 and the target power calculation apparatus 130 have substantially the same hardware configuration, only the hardware configuration of the target power calculation apparatus 130 will be described.

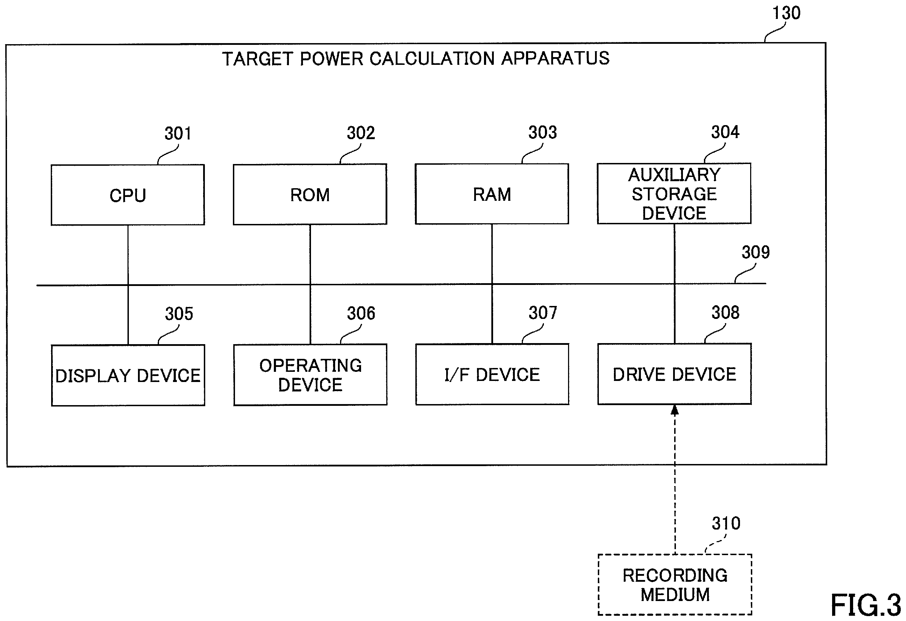

Fig. 3 is a drawing illustrating an example of the hardware configuration of the target power calculation apparatus. As illustrated in Fig. 3, the target power calculation apparatus 130 includes a CPU (central processing unit) 301, a ROM (read only memory) 302, and a RAM (random access memory) 303. The CPU 301, the ROM 302, and the RAM 183 together constitute a computer. The target power calculation apparatus 130 further includes an auxiliary storage device 304, a display device 305, an operating device 306, an I/F (interface) device 307, and a drive device 308. The individual hardware parts of the target power calculation apparatus 130 are connected to one another through a bus 309.

The CPU 301 is an arithmetic device which executes various types of program (e.g., target power calculation programs) installed in the auxiliary storage device 304. The ROM 302 is a nonvolatile memory. The ROM 302, which functions as a main memory device, stores various types of program, data, and the like necessary for the CPU 301 to execute the various types of program installed in the auxiliary storage device 304. Specifically, the ROM 302 stores boot programs and the like such as BIOS (basic input/output system) and EFI (extensible firmware interface).

The RAM 303 is a volatile memory such as a DRAM (dynamic random access memory) and an SRAM (static random access memory). The RAM 303, which functions as a main memory device, provides a work area to which the various types of program installed in the auxiliary storage device 304 are loaded when executed by the CPU 301.

The auxiliary storage device 304 stores various types of program, and stores information used when the various types of program are executed.

The display device 305 is a display apparatus that displays information (e.g., history information) obtained by the target power calculation apparatus 130. The operating device 306 is an operating apparatus that is used by the administrator of the demand control apparatus 120 or the users of each room, for example, to perform various types of operation with respect to the target power calculation apparatus 130. The I/F device 2307 is a communication device for communicating with the demand control apparatus 120.

The drive device 308 is a device to which a recording medium 310 is set. Here, the recording medium 310 includes a medium for optically, electrically, or magnetically recording information, such as a CD-ROM, a flexible disk, a magneto-optical disk, or the like. The recording medium 310 may also include a semiconductor memory or the like that electrically records information, such as a ROM, a flash memory, or the like.

The various types of programs to be installed in the auxiliary storage device 304 are installed by the drive device 308 reading the various types of programs recorded in the recording medium 310 upon the recording medium 310 being supplied and set in the drive device 308, for example. Alternatively, the various types of program to be installed in the auxiliary storage device 304 may be installed upon being downloaded from a network (not shown).

### <Functional Configuration of Demand Controller>

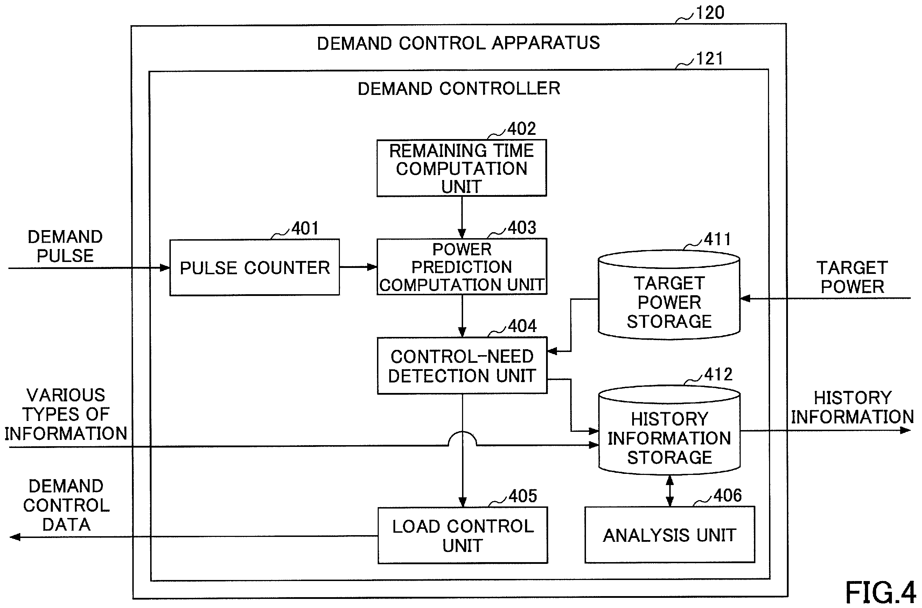

In the following, the functional configuration of the demand controller 121 will be described. Fig. 4 is a drawing illustrating an example of the functional configuration of the demand controller. As illustrated in Fig. 4, the demand controller 121 includes a pulse counter 401, a remaining time computation unit 402, a power prediction computation unit 403, a control-need detection unit 404, a load control unit 405, and an analysis unit 406.

The pulse counter 401 accumulates demand pulses to calculate track-record information about the power used by the demand control object 110. The remaining time computation unit 402 subtracts a lapsed time from the demand period (e.g., 30 minutes) to calculate a remaining time length. The power prediction computation unit 403 calculates predicted power based on the track-record information about the power used and the remaining time length.

The control-need detection unit 404 checks whether control is needed, based on the target power retrieved from a target power storage 411 and set in the memory as well as the predicted power calculated by the power prediction computation unit 403. The control-need detection unit 404 supplies a suspension level to the load control unit 405 upon detecting the need for control.

The suspension level is a value indicative of the extent to which the supply of power is suspended in response to a suspend instruction with respect to the devices included in the demand control object 110. A high suspension level state refers to the state in which a suspend instruction is issued to a large number of devices, or the state in which the functions of these devices are restricted. A low suspension level state refers to the state in which a suspend instruction is issued to only a small number of devices, or the state in which the functions of the devices are not restricted.

The target power calculation apparatus 130 updates the target power stored in the target power storage 411. The control-need detection unit 404 stores the retrieved target power, the supplied suspension level, the track-record information about the consumed power, and the like in a history information storage 412 such that they are associated with the various types of information transmitted from the demand control object 110.

The load control unit 405 transmits demand control data to the demand control object 110. The demand control data includes a suspend instruction or a resume instruction responsive to the suspension level supplied from the control-need detection unit 404.

The analysis unit 406 analyzes the suspension level stored in the history information storage 412, and stores the analysis results in the history information storage 412 such that the results are associated with the suspension level.

The target power calculation apparatus 130 retrieves the history information stored in the history information storage 412.

### <Specific Example of Demand Control Process>

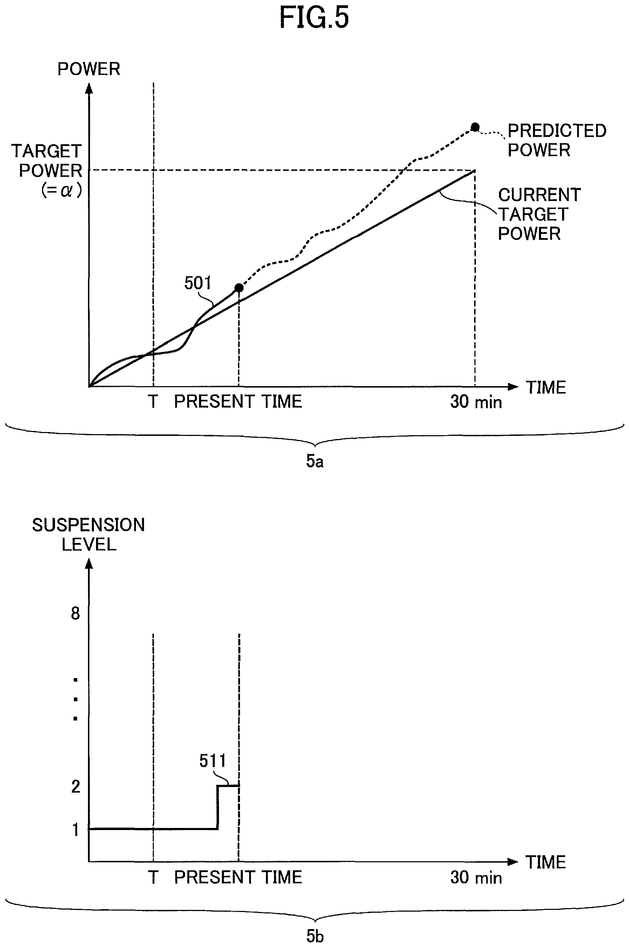

In the following, a specific example of the demand control process by the demand controller 121 will be described. Fig. 5 is a drawing illustrating a specific example of the demand control process.

An example of the track-record information about power consumed during the demand period is illustrated in 5a of Fig. 5. In 5a of Fig. 5, the horizontal axis represents time, and the vertical axis represents power. "T" in the horizontal axis indicates the time until which the outputting of demand control data should be prohibited, and "30 minutes" indicates the end of the demand period" "α" in the vertical axis indicates the target power.

A graph 501 illustrated in 5a of Fig. 5 represents the track-record information about power consumed from immediately after the start of the demand period to the present time. The power prediction computation unit 403 calculates: predetermined pulse weight x accumulated pulse value x (60/demand period [minutes]), thereby calculating the track record information about power consumed up to the present time. The power prediction computation unit 403 further calculates: (the track-record information about power consumed up to the present time) + (a change in power during the preceding Δt minutes) / (sampling time interval Δt) x (remaining time), thereby calculating predicted power.

The control-need detection unit 404 calculates: target power / demand period x lapsed time, thereby calculating a current target power at each time point.

An example of the occurrence of a suspension level during the demand period is illustrated in 5b of Fig. 5. In 5b of Fig. 5, the horizontal axis represents time, and the vertical axis represents the suspension level.

The control-need detection unit 404 increases the suspension level by an increment of one when:
- predicted power ≥ target power; and
- track-record information about power consumed up to the present time ≥ current target power.

In such a case, the load control unit 405 outputs a suspend instruction as demand control data.

Further, the control-need detection unit 404 decreases the suspension level by a decrement of one when:
- predicted power < target power; and
- track-record information about power consumed up to the present time < current target power.

In such a case, the load control unit 405 outputs a resume instruction as demand control data.

The control-need detection unit 404 maintains the suspension level as it is when neither of the above-noted conditions are satisfied. In such a case, the load control unit 405 does not output demand control data (i.e., suspend instruction or resume instruction).

A graph 511 illustrated in 5b of Fig. 5 represents the occurrences of suspension levels from immediately after the start of the demand period to the present time. In the example illustrated in the graph 511, the following conditions:
- predicted power ≥ target power; and
- track-record information about power consumed up to the present time ≥ current target power,
are satisfied immediately before the present time, so that the control-need detection unit 404 increases the suspension level by an increment of one.

### <Specific Example of Analytic Result by Analysis Unit>

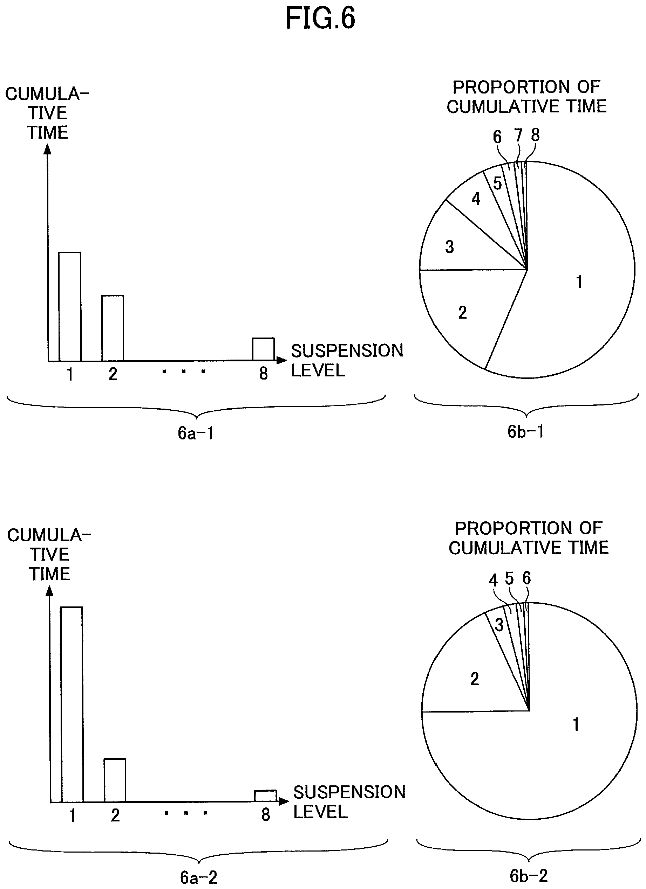

In the following, specific examples of analytic results obtained by the analysis unit 406 will be described. Analytic results by the analysis unit 406 are obtained when the analysis unit 406 analyzes the occurrences of suspension levels stored in the history information storage 412. Fig. 6 is a drawing illustrating specific examples of the analytic results.

Cumulative time lengths of respective suspension levels are illustrated in 6a-1 of Fig. 6 and 6a-2 of Fig. 6, as calculated by the analysis unit 406 analyzing the status of occurrences of suspension levels that are stored in the history information storage 412 by the control-need detection unit 404. It may be noted that 6a-1 of Fig. 6 and 6a-2 of Fig. 6 show cumulative time lengths on a suspension-level-specific basis in respective cases in which different target powers are set during the demand control process concerning the same demand control object 110. As shown in these cases, changing the setting of target power causes significant changes to be made in the cumulative time lengths of respective suspension levels.

Proportions of cumulative time lengths of respective suspension levels are illustrated in 6b-1 of Fig. 6 and 6b-2 of Fig. 6, as calculated by the analysis unit 406 analyzing the status of occurrences of suspension levels that are stored in the history information storage 412 by the control-need detection unit 404. It may be noted that 6b-1 of Fig. 6 and 6b-2 of Fig. 6 show the proportions of cumulative time lengths of individual suspension levels when respective different target powers are set during the demand control process concerning the same demand control object 110. As shown in these cases, changing the setting of target power causes significant changes to be made in the proportions of cumulative time lengths of individual suspension levels.

### <Specific Example of History Information>

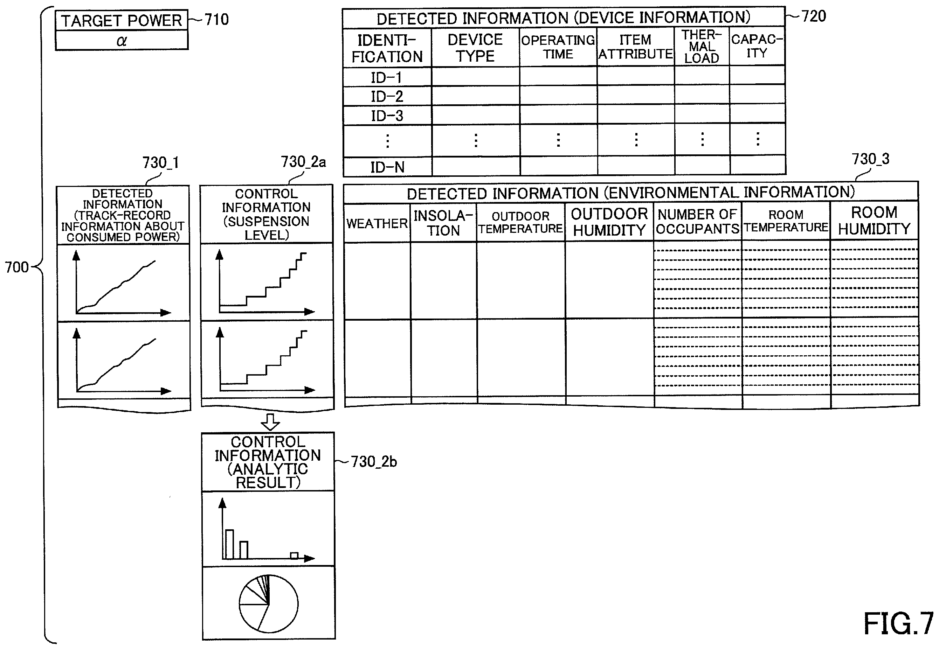

In the following, specific examples of history information stored in the history information storage 412 will be described. Fig. 7 is a drawing illustrating specific examples of history information.

As illustrated in Fig. 7, history information 700 includes current target power information 710. The example illustrated in Fig. 7 indicates that the current target power is "α".

The history information 700 further includes device information 720 about each device included in the demand control object 110. The device information 720 includes information items that are "identification information", "device type", "operating time length", "item attribute", "thermal load", and "capacity".

The history information 700 further includes track-record information 730_1 about consumed power separately stored for each demand period. The history information 700 further includes suspension levels 730_2a separately stored for each demand period, and also includes analytic results 730_2b of the suspension levels 730_2a. Information including both the suspension levels 730_2a and the analytic results 730_2b will hereinafter be referred to as "control information".

The history information 700 further includes environmental information 730_3 separately stored for each demand period. Information including the device information 720, the track-record information 730_1 about consumed power, and the environmental information 730_3 will hereinafter be referred to as "detected information".

### <Functional Configuration of Target Power Calculation Apparatus>

In the following, a description will be given of the functional configuration of the target power calculation apparatus 130 according to the first embodiment. It may be noted that in what follows, the learning phase and the inference phase will be described separately.

### (1) Functional Configuration in Learning Phase

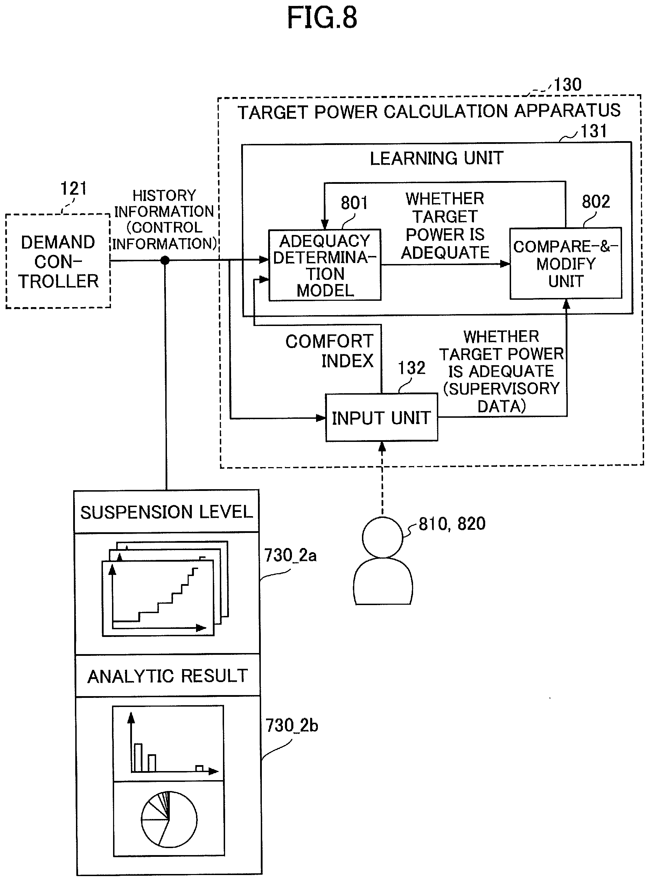

The functional configuration in the learning phase will be described first. Fig. 8 is a drawing illustrating an example of the functions of the target power calculation apparatus that are implemented during the learning phase according to the first embodiment. As illustrated in Fig. 8, the target power calculation apparatus 130 functions as the learning unit 131 and the input unit 132 in the learning phase.

The learning unit 131 and the input unit 132 retrieves, from among the history information 700 stored in the history information storage 412 of the demand controller 121, the control information concerning a period in which a demand control process is performed based on a predetermined target power (i.e., the period of a demand control process using a predetermined target power). For example, the learning unit 131 and the input unit 132 retrieves the suspension levels 730_2a and the analytic results 730_2b as the control information.

The input unit 132 displays the retrieved control information to an administrator 810 of the demand control apparatus 120, for example. The administrator 810 determines whether the target power is adequate based on past knowledge. The input unit 132 receives entered information indicative of whether the target power is adequate as determined by the administrator 810.

The input unit 132 also displays the retrieved control information to users 820 of the rooms 211, 221, and 231, for example. The users 820 determine a comfort index (inclusive of the presence or absence of comfort) based on sensations. The input unit 132 receives entered information indicative of the comfort indexes regarding the rooms 211, 221, and 231 as determined by the users 820.

The learning unit 131 includes an adequacy determination model 801 and a compare-&-modify unit 802. The learning unit 131 inputs the retrieved control information and the entered and received information indicative of comfort indexes into the adequacy determination model 801 to run the adequacy determination model 801. With this arrangement, the adequacy determination model 801 outputs information indicative of whether the target power is adequate.

The information that indicates whether the target power is adequate and that is output from the adequacy determination model 801 is supplied to the compare-&-modify unit 802. The compare-&-modify unit 802 compares:
- the information indicative of whether the target power is adequate as output from the adequacy determination model 801 and
- the information (supervisory data) indicative of whether the target power is adequate as entered into and received by the input unit 132.

The compare-&-modify unit 802 modifies the model parameters of the adequacy determination model 801 based on the results of comparison.

As described above, the learning unit 131 performs machine learning with respect to the adequacy determination model 801 for finding the relationship between:
- control information as well as information indicative of one or more comfort indexes (i.e., dataset) and
- information indicative of whether the target power is adequate.

With this arrangement, the learning unit 131 generates a trained adequacy determination model for determining whether the target power is adequate.

The example illustrated in Fig. 6 is directed to a case in which the control information and the information indicative of comfort indexes are input into the adequacy determination model 801. Alternatively, only the control information or part of the control information may be input into the adequacy determination model 801.

As described above, the learning unit 131 performs machine learning with respect to the adequacy determination model 801 for finding the relationship between:
- part of the control information (i.e., the suspension levels 730_2a) and
- information indicative of whether the target power is adequate,
or with respect to the adequacy determination model 801 for finding the relationship between:
- the control information (i.e., the suspension levels 730_2a and part of the analytic results 730_2b) and
- information indicative of whether the target power is adequate.

With this arrangement, the learning unit 131 generates a trained adequacy determination model for determining whether the target power is adequate (it may be noted that part of the analytic results 730_2b refers to either the cumulative time lengths of suspension levels or the proportions of cumulative time lengths of suspension levels).

### (2) Functional Configuration in Inference Phase

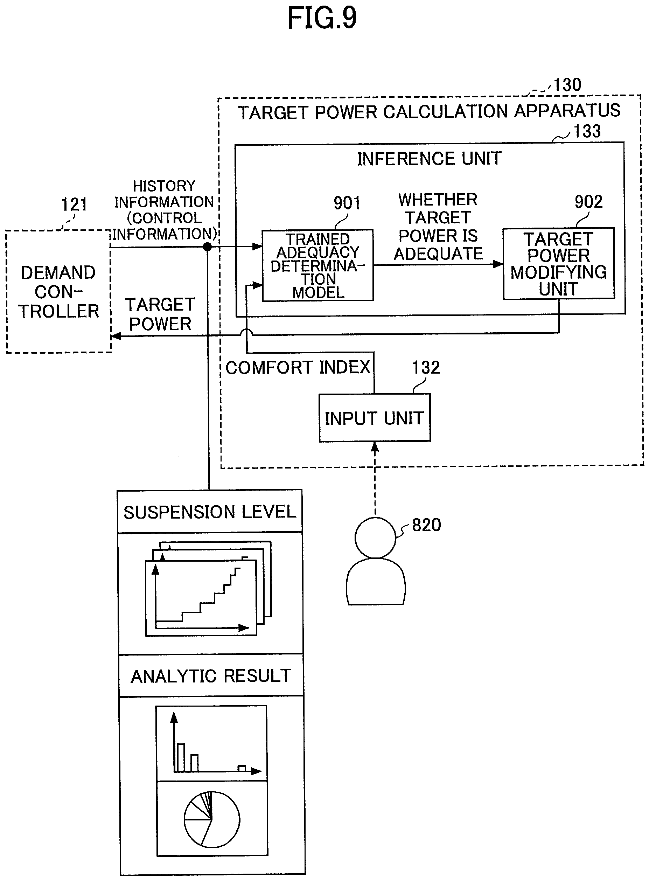

The functional configuration in the inference phase will be described next. Fig. 9 is a drawing illustrating an example of the functions of the target power calculation apparatus that are implemented during the inference phase according to the first embodiment. As illustrated in Fig. 9, the target power calculation apparatus 130 functions as the input unit 132 and the inference unit 133 in the inference phase.

The inference unit 133 includes a trained adequacy determination model 901 generated by the learning unit 131, and includes a target power modifying unit 902. The learning unit 131 retrieves, from among history information 700 stored in the history information storage 412 of the demand controller 121, the control information concerning a period in which a demand control process is performed based on a current target power (i.e., the period of a demand control process using a current target power). The control information retrieved by the inference unit 133 is different from the control information retrieved by the learning unit 131 when the learning unit 131 performed machine learning.

The inference unit 133 obtains via the input unit 132 information indicative of comfort indexes regarding the rooms 211, 221, and 231 as determined by the users 820 during the period of a demand control process executed on the current target power.

The inference unit 133 inputs the retrieved control information and the obtained information indicative of comfort indexes into the trained adequacy determination model 901 to run the trained adequacy determination model 901. With this arrangement, the trained adequacy determination model 901 infers information indicative of whether the target power is adequate.

The target power modifying unit 902 corrects the target power based on the information indicative of whether the target power is adequate, which is inferred by the trained adequacy determination model 901. Specifically, when the trained adequacy determination model 901 has inferred that the target power is adequate, the target power modifying unit 902 transmits the current target power to the demand control apparatus 120 without correcting the current target power.

When the trained adequacy determination model 901 has inferred that the target power is inadequate, the target power modifying unit 902 corrects the current target power based on a predetermined correction amount, and then transmits the corrected target power to the demand control apparatus 120.

In the manner described above, the inference unit 133 corrects the target power by inferring whether the target power is adequate based on the information indicative of comfort indexes and the control information used during the period in which a demand control process is performed based on the current target power, thereby deriving an adequate target power.

The description given above has been directed to a case in which the inference unit 133 inputs control information and information indicative of comfort indexes into the trained adequacy determination model 901. Alternatively, when the trained adequacy determination model 901 has been generated based only on control information (or part of the control information), the inference unit 133 inputs only control information (or part of the control information) into the trained adequacy determination model 901.

The description given above has been directed to a case in which the trained adequacy determination model 901 and the target power modifying unit 902 are provided in the inference unit 133. Alternatively, the trained adequacy determination model 901 and the target power modifying unit 902 may be provided separately from each other. For example, the trained adequacy determination model 901 may be provided in the inference unit, while the target power modifying unit 902 may be provided in a correction unit (not shown) outside the inference unit.

### <Flow of Target Power Calculation Process>

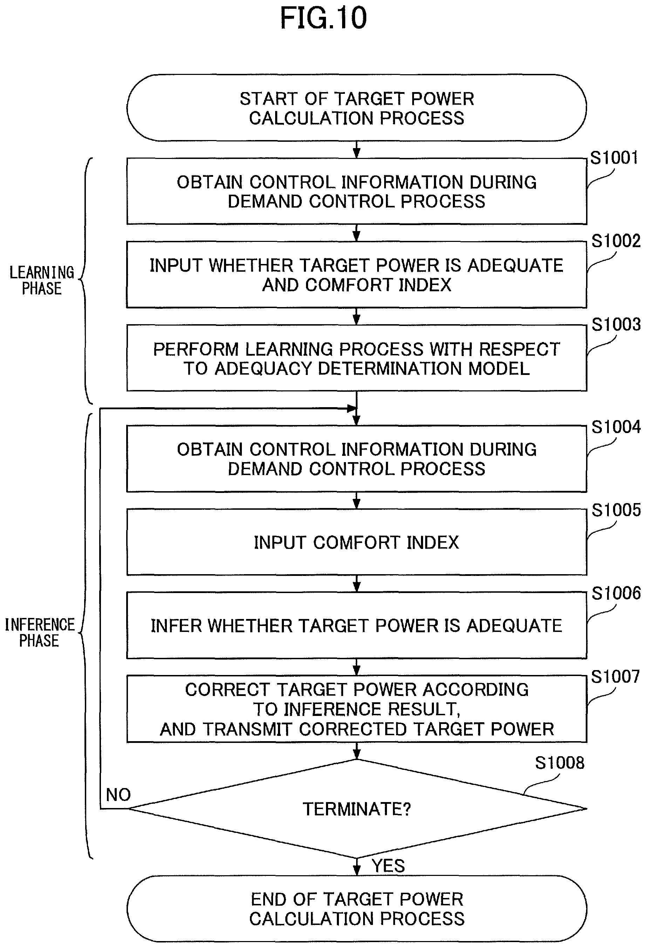

In the following, a description will be given of a target power calculation process performed by the target power calculation apparatus 130 according to the first embodiment. Fig. 10 is a flowchart illustrating the flow of a target power calculation process according to the first embodiment.

In step S1001, the learning unit 131 obtains control information used during the period of a demand control process during which a demand control process is performed based on a predetermined target power.

In step S1002, the input unit 132 receives, as entered by the users and the administrator, information indicative of one or more comfort indexes and information indicative of whether the target power is adequate during the period of a demand control process during which a demand control process is performed based on the predetermined target power.

In step S1003, the learning unit 131 inputs the control information into the adequacy determination model 801 so as to run the adequacy determination model 801. The learning unit 131 performs machine learning with respect to the adequacy determination model 801 such that the information indicative of whether the target power is adequate as output from the adequacy determination model 801 approaches the information (supervisory data) indicative of whether the target power is adequate as input via the input unit 132.

In step S1004, the inference unit 133 obtains control information used during the period of a predetermined demand control process.

In step S1005, the input unit 132 receives entered information indicative of one or more comfort indexes during the period of a predetermined demand control process.

In step S1006, the inference unit 133 inputs the obtained control information and information indicative of comfort indexes into the trained adequacy determination model 901 to run the trained adequacy determination model 901. With this arrangement, the inference unit 133 infers information indicative of whether the target power is adequate.

In step S1007, the inference unit 133 corrects the target power based on the inferred outcome, and transmits the corrected target power to the demand control apparatus 120. With this arrangement, the corrected target power is set in the memory in the demand control apparatus 120.

In step S1008, the inference unit 133 determines whether to terminate the target power calculation process. Upon determining in step S1008 that the target power calculation process is to be continued (NO in step S1008), the procedure returns to step S1004.

Upon determining in step S1008 that the target power calculation process is to be terminated (YES in step S1008), the target power calculation process is terminated.

Fig. 10 has been directed to a case in which the learning unit 131 performs batch learning that modifies model parameters upon inputting control information into the adequacy determination model 801 in a batch. Alternatively, the learning unit 131 may perform sequential learning that modifies model parameters upon inputting control information into the adequacy determination model 801 a predetermined number of bytes at a time.

### <Summary>

As is understood from the descriptions provided heretofore, the target power calculation apparatus 130 of the first embodiment is configured:
- to learn whether the target power set in the period of a demand control process is adequate, according to the control information (or part thereof) obtained during the period of the demand control process;
- to infer whether the target power set in the next period of a demand control process is adequate, according to the control information (or part thereof) obtained during the next period of the demand control process; and
- to correct the noted set target power with a predetermined correction amount upon inferring that the target power is inadequate.

With this arrangement, the target power calculation apparatus 130 of the first embodiment enables accurate determination of whether the target power is adequate, thereby successfully deriving a proper target power.

The first embodiment as described above thus provides a target power calculation apparatus, a target power calculation method, and a target power calculation program for deriving a target power that is to be set when performing a demand control process.

### [Second Embodiment]

The first embodiment described above has been directed to a case in which, for the purpose of calculating target power, machine learning is performed to learn the relationship between control information (or part thereof) and information indicative of whether the target power is adequate. The second embodiment is differently configured such that, for the purpose of calculating target power, machine learning is performed to learn the relationship between target power and track-record information about power consumption. In the following, the second embodiment will be described with a focus on the differences from the first embodiment.

### <Functional Configuration of Target Power Calculation Apparatus>

A description will first be given of the functional configuration of the target power calculation apparatus 130 according to the second embodiment. In what follows also, the learning phase and the inference phase will be described separately.

### (1) Functional Configuration in Learning Phase

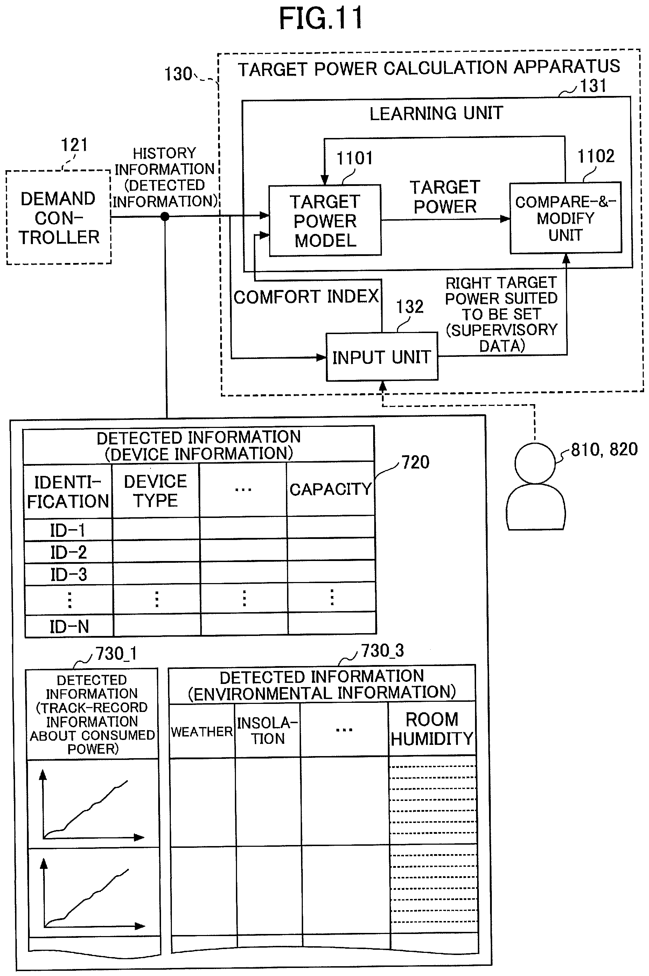

Fig. 11 is a drawing illustrating an example of the functions of the target power calculation apparatus that are implemented during the learning phase according to the second embodiment. As illustrated in Fig. 11, the target power calculation apparatus 130 functions as the learning unit 131 and the input unit 132 in the learning phase.

The learning unit 131 and the input unit 132 retrieves, from among the history information 700 stored in the history information storage 412 of the demand controller 121, the detected information concerning a period in which a demand control process is performed based on a predetermined target power (i.e., the period of a demand control process using a predetermined target power). The learning unit 131 and the input unit 132 retrieves, as the detected information, the device information 720, the track-record information 730_1 about consumed power, and the environmental information 730_3.

The input unit 132 displays the retrieved detected information to an administrator 810 of the demand control apparatus 120, for example. The administrator 810 determines, based on past knowledge, the right target power suited to be set for the given period of a demand control process. The input unit 132 receives an entered right target power suited to be set for the given period of a demand control process as determined by the administrator 810. The input unit 132 also displays the retrieved control information to users 820 of the rooms 211, 221, and 231, for example. The users 820 determine a comfort index based on sensations. The input unit 132 receives the entered information indicative of the comfort indexes regarding the rooms 211, 221, and 231 as determined by the users 820.

The learning unit 131 includes a target power model 1101 and a compare-&-modify unit 1102. The learning unit 131 inputs the retrieved control information and the entered and received information indicative of comfort indexes into the target power model 1101 to run the target power model 1101. With this arrangement, the target power model 1101 outputs a target power.

The compare-&-modify unit 1102 compares the target power output from the target power model 1101 with the target power (supervisory data) that is received by the input unit 132. The compare-&-modify unit 1102 modifies the model parameters of the target power model 1101 based on the results of comparison.

As described above, the learning unit 131 performs machine learning with respect to the target power model 1101 for finding the relationship between:
- detected information as well as information indicative of one or more comfort indexes (i.e., dataset) and
- target power.

With this arrangement, the learning unit 131 generates a trained target power model.

The example illustrated in Fig. 11 is such that the learning unit 131 inputs detected information and information indicative of comfort indexes to the target power model 1101. Alternatively, the learning unit 131 may input only the detected information or only a part of the detected information into the target power model 1101.

As described above, the learning unit 131 performs machine learning with respect to the target power model 1101 for finding the relationship between:
- detected information and
- target power,

or with respect to the target power model 1101 for finding the relationship between:
   - part of the detected information (i.e., the track-record information 730_1 about consumed power) and
   - target power,
or with respect to the target power model 1101 for finding the relationship between:
   - part of the detected information (i.e., a dataset comprised of the track-record information 730_1 about consumed power and the device information 720) and
   - target power,
or with respect to the target power model 1101 for finding the relationship between:
   - part of the detected information (i.e., a dataset comprised of the track-record information 730_1 about consumed power and the environmental information 730_3) and
   - target power.

With this arrangement, the learning unit 131 generates a trained target power model.

### (2) Functional Configuration in Inference Phase

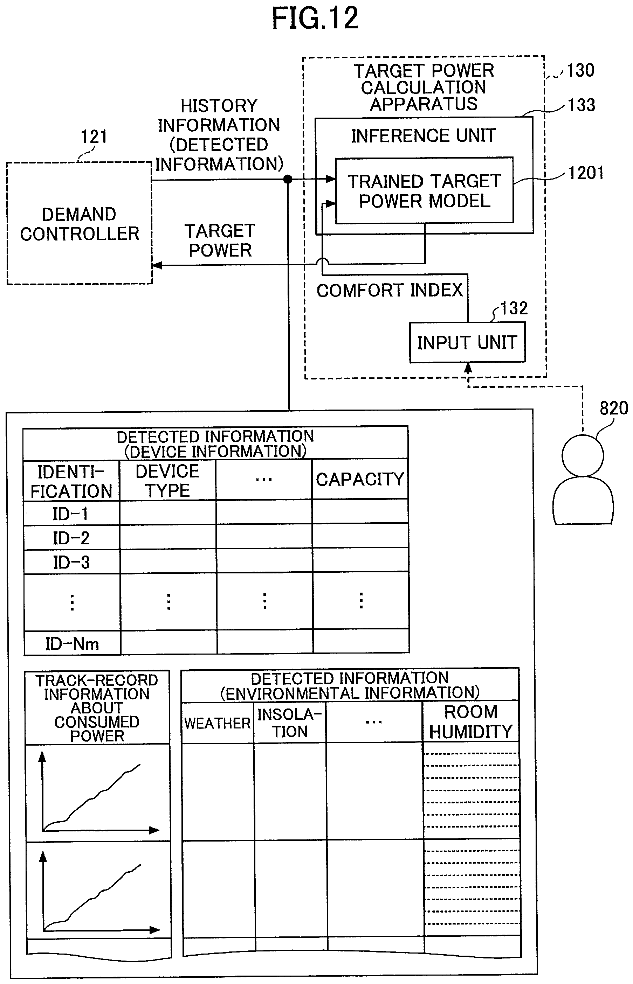

The functional configuration in the inference phase will be described next. Fig. 12 is a drawing illustrating an example of the functions of the target power calculation apparatus that are implemented during the inference phase according to the second embodiment. As illustrated in Fig. 12, the target power calculation apparatus 130 functions as the input unit 132 and the inference unit 133 in the inference phase.

The inference unit 133 includes a trained target power model 1201 generated by the learning unit 131. The learning unit 131 retrieves, from among history information 700 stored in the history information storage 412 of the demand controller 121, the detected information concerning a period in which a demand control process is performed based on a current target power (i.e., the period of a demand control process using a current target power). The detected information retrieved by the inference unit 133 is different from the detected information retrieved by the learning unit 131 when the learning unit 131 performed machine learning.

The inference unit 133 obtains via the input unit 132 information indicative of comfort indexes regarding the rooms 211, 221, and 231 as determined by the users 820 during the period of a demand control process executed on the current target power.

The inference unit 133 inputs the retrieved detected information and the obtained information indicative of comfort indexes into the trained target power model 1201 to run the trained target power model 1201. With this arrangement, the trained target power model 1201 infers a target power.

Further, the inference unit 133 transmits the target power inferred by the trained target power model 1201 to the demand control apparatus 120.

In the manner described above, the inference unit 133 infers the target power based on the information indicative of comfort indexes and the detected information observed during the period in which a demand control process is performed based on the current target power, thereby deriving an adequate target power.

The description given above has been directed to a case in which the inference unit 133 inputs detected information and information indicative of comfort indexes into the trained target power model 1201. Alternatively, when the trained target power model 1201 has been generated based only on detected information (or part of the detected information), the inference unit 133 inputs only detected information (or part of the detected information) into the trained target power model 1201.

### <Flow of Target Power Calculation Process>

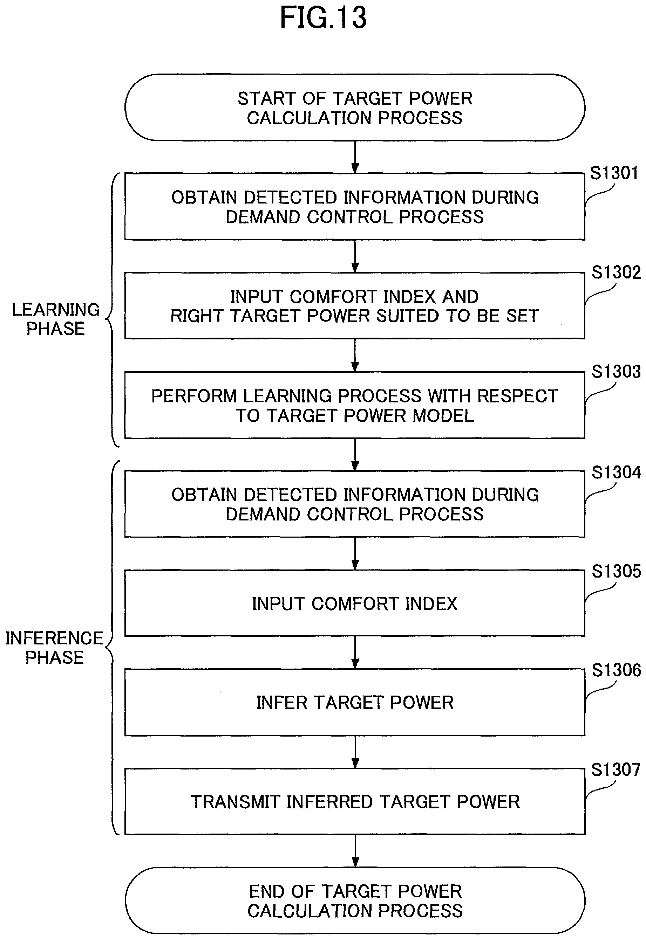

In the following, a description will be given of a target power calculation process performed by the target power calculation apparatus 130 according to the second embodiment. Fig. 13 is a flowchart illustrating the flow of a target power calculation process according to the second embodiment.

In step S1301, the learning unit 131 obtains detected information observed during the period of a demand control process executed on a predetermined target power.

In step S1302, the input unit 132 receives entered information indicative of one or more comfort indexes and the right target power suited to be set for the period of a predetermined demand control process executed on a predetermined target power.

In step S1303, the learning unit 131 inputs the detected information into the target power model 1101 so as to run the target power model 1101. The learning unit 131 performs machine learning with respect to the target power model 1101 such that the target power output from the target power model 1101 approaches the target power (supervisory data) input via the input unit 132.

In step S1304, the inference unit 133 obtains detected information observed during the period of a predetermined demand control process.

In step S1305, the input unit 132 receives entered information indicative of one or more comfort indexes during the period of a predetermined demand control process.

In step S1306, the inference unit 133 inputs the obtained detected information and the information indicative of one or more comfort indexes into the trained target power model 1201 to run the trained target power model 1201. With this arrangement, the inference unit 133 infers a target power.

In step S1307, the inference unit 133 transmits the inferred target power to the demand control apparatus 120. With this arrangement, the inferred target power is set in the memory in the demand control apparatus 120.

### <Summary>

As is understood from the descriptions provided heretofore, the target power calculation apparatus 130 of the second embodiment is configured: - to obtain track-record information about power consumed during the period of a demand control process based on the set target power, and to learn a right target power suited to be set for the period of a demand control process, according to the track-record information about consumed power.

With this arrangement, the target power calculation apparatus 130 of the second embodiment can derive a proper target power.

The second embodiment as described above thus provides a target power calculation apparatus, a target power calculation method, and a target power calculation program for deriving a target power that is to be set when performing a demand control process.

[Third Embodiment] - not being part of the present invention.

The first and second embodiments described above have been directed to a case in which supervisory data is used when performing machine learning with respect to a model for calculating a target power. The third embodiment, which is differently directed to reinforced learning, will be described. In the following, the third embodiment will be described with a focus on the differences from the first and second embodiments.

### <System Configuration of Demand Control System>

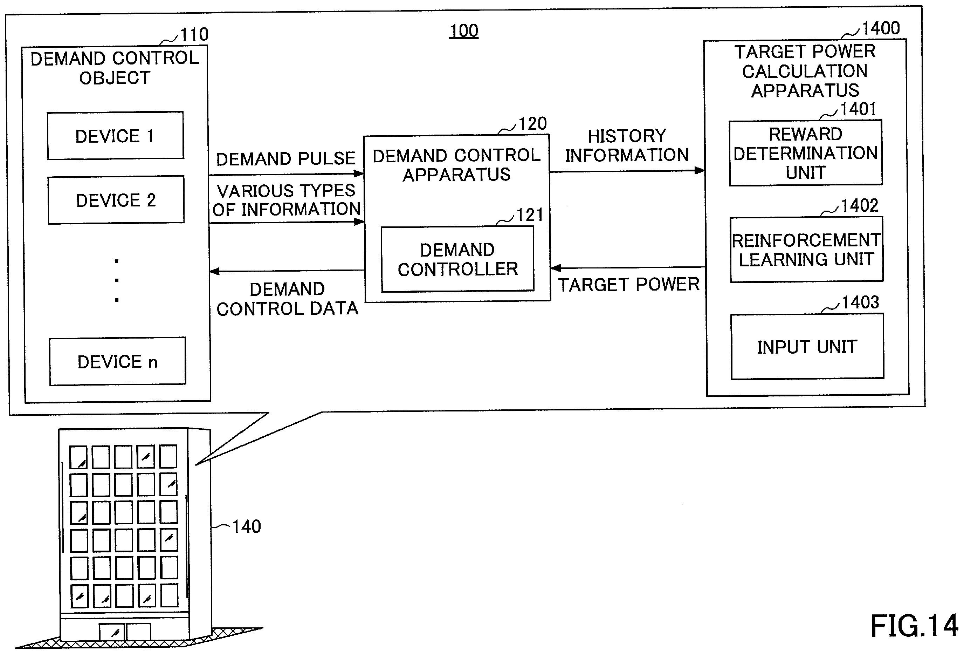

The system configuration of a demand control system will be described first. Fig. 14 is a second drawing illustrating an example of the system configuration of a demand control system. What differs from Fig. 1 is a target power calculation apparatus 1400.

The target power calculation apparatus 1400 has a target power calculation program installed therein, which is executed to cause the target power calculation apparatus 1400 to function as a reward determination unit 1401, a reinforcement learning unit 1402, and an input unit 1403.

The reward determination unit 1401 determines rewards that the reinforcement learning unit 1402 uses when performing reinforcement learning.

The reinforcement learning unit 1402 performs reinforcement learning with respect to a model for calculating target power based on history information transmitted from the demand controller 121. Further, the reinforcement learning unit 1402 transmits the target power obtained by performing reinforcement learning to the demand controller 121.

The input unit 1403 receives information indicative of one or more comfort indexes regarding one or more rooms as entered by the users of the rooms, and sends the information to the reward determination unit 1401. This arrangement allows the rewards used in reinforcement learning performed by the reinforcement learning unit 1402 to reflect the information indicative of one or more comfort indexes regarding the one or more rooms.

### <Functional Configuration of Target Power Calculation Apparatus>

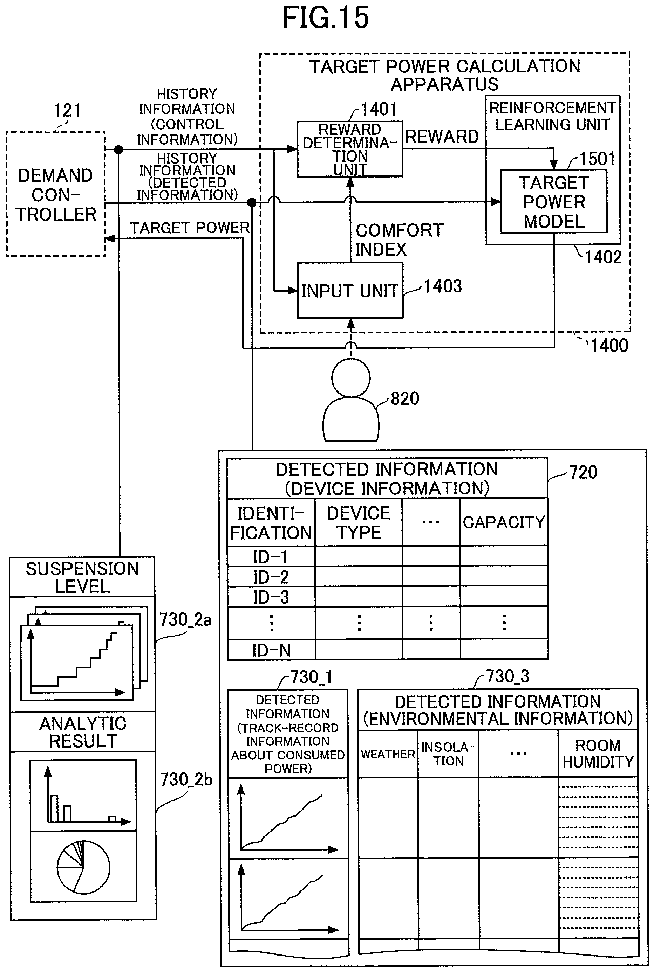

In the following, a description will be given with respect to the detail of the functional configuration of the target power calculation apparatus 1400 according to the third embodiment. Fig. 15 is a drawing illustrating an example of the functional configuration of the target power calculation apparatus 1400 according to the third embodiment.

As was described above, the target power calculation apparatus 1400 functions as the reward determination unit 1401, the reinforcement learning unit 1402, and the input unit 1403.

The reward determination unit 1401 and the input unit 1403 retrieve, from among history information 700 stored in the history information storage 412 of the demand controller 121, the control information concerning a period in which a demand control process is performed based on a current target power (i.e., the period of a demand control process using a current target power). For example, the reward determination unit 1401 and the input unit 1403 retrieve the suspension levels 730_2a and the analytic results 730_2b as the control information.

The input unit 1403 displays the retrieved control information to the users 820 of the rooms 211, 221, and 231, for example. The users 820 determine a comfort index based on sensations. The input unit 1403 receives the entered information indicative of the comfort indexes regarding the rooms 211, 221, and 231 as determined by the users 820.

The reward determination unit 1401 obtains the information indicative of comfort indexes entered into and received by the input unit 132. Further, the reward determination unit 1401 functions as a calculation unit to calculate a reward concerning the current target power based on the retrieved control information and the obtained information indicative of comfort indexes.

The reinforcement learning unit 1402 retrieves detected information concerning the period in which a demand control process is performed based on the current target power (i.e., the period of a demand control process using the current target power).

The reinforcement learning unit 1402, which is an example of the learning unit, includes a target power model 1501. The reinforcement learning unit 1402 modifies the model parameters of the target power model 1501 such that the rewards calculated by the reward determination unit 1401 becomes a maximum. Further, the reinforcement learning unit 1402 inputs the retrieved detected information into the target power model 1501 whose model parameters have been modified, thereby causing the target power model 1501 to operate. With this arrangement, the target power model 1501 outputs a target power. The reinforcement learning unit 1402 transmits the target power output by the target power model 1501 to the demand control apparatus 120.

In the manner described above, the reinforcement learning unit 1402 performs reinforcement learning with respect to the target power model 1501 such that the rewards calculated based on the information indicative of comfort indexes and the control information used during the execution of a demand control process based on the current target power become a maximum. With this arrangement, the reinforcement learning unit 1402 can derive a proper target power.

The description given above has been directed to a case in which control information and information indicative of comfort indexes are input into the reward determination unit 1401. Alternatively, the reward determination unit 1401 may be configured to receive control information (or part of the control information) only, or receive part of the control information and information indicative of comfort indexes only.

With this arrangement, the reward determination unit 1401 can calculate rewards based on:
- control information (i.e., the suspension levels 730_2a and the analytic results 730_2b),

or based on:
   - part of the control information (i.e., the suspension levels 730_2a),
or based on:
   - part of the control information (i.e., the suspension levels 730_2a) and
   - information indicative of one or more comfort indexes.

The description given above has been directed to a case in which the reinforcement learning unit 1402 inputs all the detected information into the target power model 1501. Alternatively, the reinforcement learning unit 1402 may input only a part of the detected information into the target power model 1501.

As described above, the reinforcement learning unit 1402 performs machine learning with respect to the target power model 1501 for finding the relationship between:
- part of the detected information (i.e., the track-record information 730_1 about consumed power) and
- target power,

or with respect to the target power model 1501 for finding the relationship between:
   - part of the detected information (i.e., a dataset comprised of the track-record information 730_1 about consumed power and the device information 720) and
   - target power,
or with respect to the target power model 1501 for finding the relationship between:
   - part of the detected information (i.e., a dataset comprised of the track-record information 730_1 about consumed power and the environmental information 730_3) and
   - target power.

### <Flow of Target Power Calculation Process>

In the following, a description will be given of a target power calculation process performed by the target power calculation apparatus 1400 according to the third embodiment. Fig. 16 is a flowchart illustrating the flow of a target power calculation process according to the third embodiment.

In step S1601, the reward determination unit 1401 obtains control information used during the period of a demand control process executed on a current predetermined target power.

In step S1602, the input unit 1403 receives entered information indicative of one or more comfort indexes during the period of a demand control process executed on the current target power.

In step S1603, the reward determination unit 1401 calculates a reward concerning the target power based on the control information and the information indicative of one or more comfort indexes.

In step S1604, the reward determination unit 1401 checks whether the calculated reward is greater than or equal to a predetermined threshold. Upon determining in step S1604 that the calculated reward is less than the predetermined threshold (NO in step S1604), the procedure proceeds to step S1605.

In step S1605, the reinforcement learning unit 1402 performs machine learning with respect to the target power model 1501 such that the calculated reward becomes a maximum.

In step S1606, the reinforcement learning unit 1402 obtains detected information observed during the period of a demand control process executed on the current target power.

In step S1607, the reinforcement learning unit 1402 inputs the obtained detected information into the target power model 1501 so as to run the target power model 1501. With this arrangement, the reinforcement learning unit 1402 outputs a target power.

In step S1608, the reinforcement learning unit 1402 transmits the output target power to the demand control apparatus 120. With this arrangement, the output target power is set in the memory in the demand control apparatus 120. The procedure thereafter returns to step S1601.

Upon determining in step S1604 that the calculated reward is greater than or equal to the predetermined threshold (YES in step S1604), the target power calculation process comes to an end.

### <Summary>

As is understood from the descriptions provided heretofore, the target power calculation apparatus 1400 of the third embodiment is configured:
- to calculate a reward concerning a target power based on control information (or part thereof) and information indicative of one or more comfort indexes obtained during the period of a demand control process executed on a current target power, and to perform reinforcement learning with respect to a target power model such that the calculated reward becomes a maximum, and
- to run the target power model for which reinforcement learning has been performed, by inputting thereinto detected information (or part thereof) obtained during the period of a demand control process executed on the current target value, and to transmit the target power output from the executed target power model to a demand control apparatus as a target power for the period of a next demand control process.

With this arrangement, the target power calculation apparatus 1400 of the third embodiment can derive a proper target power.

The third embodiment as described above thus provides a target power calculation apparatus, a target power calculation method, and a target power calculation program for deriving a target power that is to be set when performing a demand control process.

### [Fourth Embodiment]

The third embodiment has been described with respect to a case in which the reward determination unit calculates a reward concerning a target power based on control information and information indicative of one or more comfort indexes. However, the method of calculating rewards is not limited to this. For example, the trained adequacy determination model generated in the first embodiment may be utilized to infer whether the target power is adequate based on control information and information indicative of one or more comfort indexes. A reward concerning the target power may then be calculated based on the result of inference.

### [Other Embodiments]

The description of the embodiments provided heretofore makes no mention of the details of the models used in machine learning (i.e., the adequacy determination model and the target power model). In this regard, any types of model may be utilized as the model used in machine learning. Specifically, any types of model, such as an NN (neural network) model, a random forest model, an SVM (support vector machine) model, or the like, may be utilized.

The description of the first and second embodiments provided heretofore makes no mention of the details of how to modify model parameters when needed based on the result of comparison by the compare-&-modify unit. It may be noted that the method of modifying model parameters performed by the compare-&-modify unit should depend on the types of model.

The description of the third embodiment provided heretofore makes no mention of the details of how the reward determination unit calculates rewards. It may be noted that the reward determination unit may calculate rewards by use of any method.

The first embodiment has been described with respect to the configuration which infers whether the target power is adequate (i.e., whether it is adequate or inadequate). The configuration may further be made to infer whether a high target power causes inadequacy or a low target power causes inadequacy when the inference indicates that the target power is inadequate, for example, Alternatively, the configuration may be made to infer the degree of inadequacy. With this arrangement, the target power modifying unit can correct the target power by use of a proper correction amount.

The description of the first embodiment provided heretofore makes no mention of the conditions for terminating the target power calculation process. In this regard, it does not matter what conditions for termination are used. For example, the target power calculation process may be configured to come to an end when the trained adequacy determination model infers that the target power is adequate continuously for a certain length of time.

The second embodiment has been described with respect to a case in which the administrator 810 of the demand control apparatus 120 determines supervisory data (i.e., the right target power suited to be set) based on detected information, and the administrator 810 inputs the determined supervisory data into the input unit. Nonetheless, the method of inputting supervisory data (i.e., right target power suited to be set) is not limited to this. For example, the input unit may receive as supervisory data the target power that has not been modified for a certain length of time as indicated in the target-power-setting history data obtained by accumulating the history of target power settings.

The embodiments have been described with respect to a case in which the target power calculation apparatus is installed inside the building 140. Notwithstanding this, the target power calculation apparatus may be situated outside the building 140. In this case, the target power calculation apparatus may function as part of the demand control system for a plurality of buildings. In the above-described embodiments, the target power calculation apparatus is configured as a separate unit from the demand control apparatus 120, but may alternatively be configured as a single unit together with the demand control apparatus 120.

Although a description has been given of the embodiments, it may be understood that various modifications may be made to the configurations and details thereof, without departing from the spirit and scope of claims.

This application is based on and claims priority to Japanese Patent Application No. 2019-023839 filed on February 13, 2019, and the entire contents of this Japanese Patent Application are incorporated herein by reference.

### [Description of Reference Symbols]

100: demand control system
110: demand control object
120: demand control apparatus
121: demand controller
130: target power calculation apparatus
131: learning unit
132: input unit
133: inference unit
710: target power information
720: device information
730_1: track-record information about consumed power
730_2a: suspension level
730_2b: analytic result
730_3: environmental information
801: adequacy determination model
802: compare-&-modify unit
901: trained adequacy determination model
902: target power modifying unit
1101: target power model
1102: compare-&-modify unit
1201: trained target power model
1400: target power calculation apparatus
1401: reward determination unit
1402: reinforcement learning unit
1403: input unit
1501: target power model

## Claims

1. Demand control system (100) comprising:
- a demand control object (110) including devices;
- a demand control apparatus (120) configured to control power supplied to each device such that a target power is not exceeded; and
- a target power calculation apparatus (130); **characterized in that**
the target power calculation apparatus (130) comprises:
a learning unit (131) comprising an adequacy determination model (801) and a compare-and-modify unit (802) and configured to perform machine learning with respect to the adequacy determination model (801) that is configured to receive, as inputs, control information and information indicative of a comfort index determined by a user, and to output information indicative of whether a target power set in a first period is adequate, the control information and the information indicative of the comfort index being obtained upon performing a demand control process in the first period based on the set target power, the compare-and-modify unit (802) configured to compare the information indicative of whether the target power is adequate as output from the adequacy determination model (801) and information indicative of whether the target power is adequate as entered into and received by an input unit (132);
an inference unit (133) including a trained adequacy determination model (901) generated by the learning unit (131),the inference unit (133) configured to input the retrieved control information and the obtained information indicative of the comfort index obtained upon performing a demand control process in a second period into the trained adequacy determination model (901)to run the trained adequacy determination model (901) , the trained adequacy determination model (901) configured to infer information indicative of whether a target power set in the second period is adequate, ; and
a correction unit configured to correct the target power set in the second period based on a predetermined correction amount upon the inference unit (133) inferring that there is inadequacy.

2. The demand control system (100) as claimed in claim 1, wherein the control information includes information indicating status of occurrences of suspension levels that indicate an extent to which supply of power is suspended by performing a demand control process.

3. The demand control system (100)as claimed in claim 2, wherein the control information includes either cumulative time lengths of the suspension levels or proportions of the cumulative time lengths of the suspension levels.

4. The demand control system (100) as claimed in any one of claims 1 to 3, wherein the learning unit (131) is configured to learn whether the target power set in the first period is adequate, in accordance with a dataset containing a combination of the control information obtained upon performing the demand control process in the first period and information indicative of a comfort level of a room which is provided with an air-conditioner for which the demand control process in the first period is performed.

## Patentansprüche

1. Bedarfssteuerungssystem (100), umfassend:
- ein Bedarfssteuerungsobjekt (110), das Vorrichtungen enthält;
- eine Bedarfssteuerungsvorrichtung (120), die konfiguriert ist, um die jeder Vorrichtung zugeführte Leistung so zu steuern, dass eine Sollleistung nicht überschritten wird; und
- eine Sollleistungsberechnungsvorrichtung (130); **dadurch gekennzeichnet, dass** die Sollleistungsberechnungsvorrichtung (130) umfasst:
eine Lerneinheit (131), die ein Adäquanzbestimmungsmodell (801) und eine Vergleichs- und Modifikationseinheit (802) umfasst und konfiguriert ist, um maschinelles Lernen in Bezug auf das Adäquanzbestimmungsmodell (801) durchzuführen, das konfiguriert ist, um als Eingaben Steuerungsinformation und Information zu empfangen, die einen von einem Benutzer bestimmten Komfortindex angibt, und um Information auszugeben, die angibt, ob eine in einer ersten Periode eingestellte Sollleistung adäquat ist, wobei die Steuerungsinformation und die Information, die den Komfortindex angibt, beim Durchführen eines Bedarfssteuerungsprozesses in der ersten Periode basierend auf der eingestellten Sollleistung erhalten werden, wobei die Vergleichs- und Modifikationseinheit (802) konfiguriert ist, um die Information, die angibt, ob die Sollleistung adäquat ist, wie von dem Adäquanzbestimmungsmodell (801)ausgegeben, und Information, die angibt, ob die Sollleistung adäquat ist, wie in eine Eingabeeinheit (132) eingegeben und von dieser empfangen, zu vergleichen;
eine Inferenzeinheit (133), die ein von der Lerneinheit (131) erzeugtes trainiertes Adäquanzbestimmungsmodell (901) enthält, wobei die Inferenzeinheit (133) konfiguriert ist, um die abgerufene Steuerungsinformation und die erhaltene Information, die den Komfortindex angibt, der beim Durchführen eines Bedarfssteuerungsprozesses in einer zweiten Periode erhalten wird, in das trainierte Adäquanzbestimmungsmodell (901) einzugeben, um das trainierte Adäquanzbestimmungsmodell (901) auszuführen, wobei das trainierte Adäquanzbestimmungsmodell (901) konfiguriert ist, um Information abzuleiten, die angibt, ob eine in der zweiten Periode eingestellte Sollleistung adäquat ist; und
eine Korrektureinheit, die konfiguriert ist, um die in der zweiten Periode eingestellte Sollleistung basierend auf einem vorbestimmten Korrekturbetrag zu korrigieren, wenn die Inferenzeinheit (133) ableitet, dass eine Unzulänglichkeit vorliegt.

2. Bedarfssteuerungssystem (100) nach Anspruch 1, wobei die Steuerungsinformation Information enthält, die den Zustand des Auftretens von Aussetzungspegeln angibt, die ein Ausmaß angeben, in dem die Leistungszufuhr durch Durchführen eines Bedarfssteuerungsprozesses ausgesetzt wird.

3. Bedarfssteuerungssystem (100) nach Anspruch 2, wobei die Steuerungsinformation entweder kumulative Zeitlängen der Aussetzungspegel oder Proportionen der kumulativen Zeitlängen der Aussetzungspegel enthält.

4. Bedarfssteuerungssystem (100) nach einem der Ansprüche 1 bis 3, wobei die Lerneinheit (131) konfiguriert ist, um zu lernen, ob die in der ersten Periode eingestellte Sollleistung adäquat ist, gemäß einem Datensatz, der eine Kombination der Steuerungsinformation, die beim Durchführen des Bedarfssteuerungsprozesses in der ersten Periode erhalten wird, und Information enthält, die einen Komfortpegel eines Raums angibt, der mit einer Klimaanlage versehen ist, für die der Bedarfssteuerungsprozess in der ersten Periode durchgeführt wird.

## Revendications

1. Système de régulation de la demande (100) comprenant :
un objet de régulation de la demande (110) comprenant des dispositifs ;
un appareil de régulation de la demande (120) configuré pour réguler la puissance fournie à chaque dispositif, de façon à ne pas dépasser une puissance cible ; et
un appareil de calcul de la puissance cible (130) ;
**caractérisé en ce que** l'appareil de calcul de la puissance cible (130) comprend :
une unité d'apprentissage (131) comprenant un modèle de détermination de l'adéquation (801) et une unité de comparaison et modification (802), et configurée pour effectuer un apprentissage machine relativement au modèle de détermination de l'adéquation (801), qui est configuré pour recevoir, comme entrées, des informations de régulation et des informations indicatives d'un indice de confort déterminé par un utilisateur, et pour émettre des informations indiquant si une puissance cible établie au cours d'une première période est adéquate, les informations de régulation et les informations indicatives de l'indice de confort s'obtenant lors de l'exécution d'un procédé de régulation de la demande au cours de la première période, d'après la puissance cible établie, l'unité de comparaison et modification (802) étant configurée pour comparer des informations indiquant si la puissance cible est adéquate en tant que sortie du modèle de détermination de l'adéquation (801) et des informations indiquant si la puissance cible est adéquate telle qu'elle a été entrée dans un organe d'entrée (132) et reçue par celui-ci ;
une unité d'inférence (133) comprenant un modèle formé de détermination de l'adéquation (901) généré par l'unité d'apprentissage (131), l'unité d'inférence (133) étant configurée pour entrer les informations de régulation extraites et les informations obtenues indicatives de l'indice de confort, obtenues lors de l'exécution d'un procédé de régulation de la demande au cours d'une deuxième période, dans le modèle formé de détermination de l'adéquation (901) pour la gestion du modèle formé de détermination de l'adéquation (901), le modèle formé de détermination de l'adéquation (901) étant configuré pour déduire des informations indiquant si une puissance cible établie au cours de la deuxième période est adéquate ; et
un module de correction configuré pour corriger la puissance cible établie au cours de la deuxième période en fonction d'un degré de correction prédéterminé en fonction de l'inférence, par l'unité d'inférence (133), de la présence d'une inadéquation.

2. Système de régulation de la demande (100) selon la revendication 1, les informations de régulation comprenant des informations indiquant l'état de cas de niveaux de suspension indiquant une mesure dans laquelle l'alimentation en énergie est suspendue par l'exécution d'un procédé de régulation de la demande.

3. Système de régulation de la demande (100) selon la revendication 2, les informations de régulation comprenant soit des durées cumulées des niveaux de suspension, soit des proportions des durées cumulées des niveaux de suspension.

4. Système de régulation de la demande (100) selon une quelconque des revendications 1 à 3, l'unité d'apprentissage (131) étant configurée pour apprendre si la puissance cible établie au cours de la première période est adéquate, conformément à un ensemble de données contenant une combinaison des informations de régulation obtenues lors de l'exécution du procédé de régulation de la demande au cours de la première période, et d'informations indicatives d'un niveau de confort d'une salle équipée avec un climatiseur pour lequel le procédé de régulation de la demande au cours de la première période est effectué.
